# EUROPEAN PATENT APPLICATION

(11) **EP 3 156 430 A1**
(43) Date of publication of application: **19.04.2017**
(21) Application number: 16191794.3
(22) Date of filing: 30.09.2016
(51) Int. Cl.: C08G 18/48, C08G 18/76, C08G 18/10, C08G 18/28, C09J 175/08

(54) **URETHANE ADHESIVE COMPOSITION**

(30) Priority: 02.10.2015 JP 2015196462
(71) Applicant: Shin-Etsu Chemical Co., Ltd., Tokyo (JP)
(72) Inventor: HIROKAMI, Munenao, Gunma-ken (JP); TSUCHIDA, Kazuhiro, Gunma-ken (JP)
(74) Representative: Stoner, Gerard Patrick

(57) **Abstract**

A urethane adhesive composition including (A) a urethane prepolymer having an active isocyanate group and (B) an organosilicon compound represented by the following formula (1): 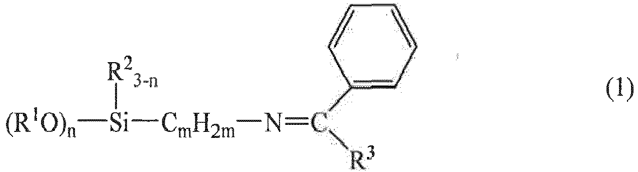 wherein R¹ represents an alkyl group having 1 to 10 carbon atoms or an aryl group having 6 to 10 carbon atoms, R² represents an alkyl group having 1 to 10 carbon atoms or an aryl group having 6 to 10 carbon atoms, R³ represents hydrogen, an aryl group having 6 to 10 carbon atoms, or t-butyl group, letter n is an integer of 1 to 3, and letter m is an integer of 1 to 12.

The urethane adhesive composition of the present invention is formulated with an organosilicon compound having a hydrolysable silyl group and a benzylideneamine structure in the molecule, thus enabling high storage stability and high adhesion to be developed.

## Description

### TECHNICAL FIELD

The present invention relates to a urethane adhesive composition containing an organosilicon compound having a hydrolysable silyl group and a benzylideneamine structure in the molecule.

### BACKGROUND

Urethane resin compositions including a urethane prepolymer having an isocyanate group at the terminal ends of the molecular chain have hitherto been in wide use as adhesives, sealants, paints, coating agents and the like. The urethane resin composition is cured by crosslinking through the reaction between moisture in air and the isocyanate group. Accordingly, these composition can be used as one-component moisture curing adhesives and are more excellent in workability than a two-component urethane resin composition wherein a curing has to be formulated prior to use.

Although the one-component urethane resin composition is formulated with an organosilicon compound having an isocyanate group to improve the adhesion between a substrate and the resin, adequate adhesion may not be obtained in many cases as described in JP-A 2014-77094, and thus the improvement thereof would be highly desirable.

### Citation List

Patent Document 1: JP-A 2014-77094

### THE INVENTION

The present invention has been made under such circumstances as described above and an object of the present invention is to provide a urethane adhesive composition with reliable high adhesion.

We have made intensive studies so as to achieve the above object and, as a result, found a urethane adhesive composition having high adhesion, the adhesive composition including (A) a urethane prepolymer having an active isocyanate group and (B) an organosilicon compound represented by the following formula (1), or a hydrolysed condensate: 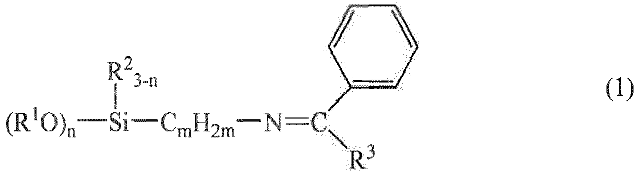 wherein R¹ represents an alkyl group having 1 to 10 carbon atoms or an aryl group having 6 to 10 carbon atoms, R² represents an alkyl group having 1 to 10 carbon atoms or an aryl group having 6 to 10 carbon atoms, R³ represents hydrogen, an aryl group having 6 to 10 carbon atoms, or t-butyl group, letter n is an integer of 1 to 3, and letter m is an integer of 1 to 12, thereby accomplishing the present invention.

More particularly, the present invention provides the following urethane adhesive compositions.

A urethane adhesive composition including (A) a urethane prepolymer having an active isocyanate group and (B) an organosilicon compound represented by the following formula (1), or a hydrolysed condensate thereof: 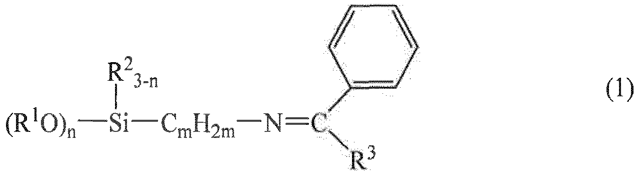 wherein R¹ represents an alkyl group having 1 to 10 carbon atoms or an aryl group having 6 to 10 carbon atoms, R² represents an alkyl group having 1 to 10 carbon atoms or an aryl group having 6 to 10 carbon atoms, R³ represents hydrogen, an aryl group having 6 to 10 carbon atoms, or t-butyl, letter n is an integer of 1 to 3, and letter m is an integer of 1 to 12.

The organosilicon compound preferably includes an organosilicon compound represented by the following formula (2) : 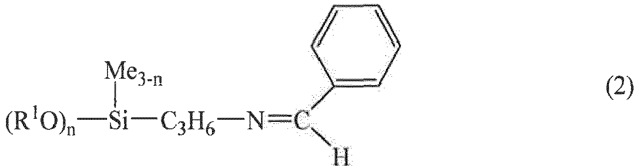 wherein R¹ and letter n have the same meanings as defined above, and Me is methyl.

The content of the organosilicon compound preferably ranges from 1 to 10 parts by weight per 100 parts by weight of the urethane prepolymer (A).

The urethane adhesive composition is preferably in the form of a one-component urethane adhesive composition.

### ADVANTAGEOUS EFFECTS

The urethane adhesive composition of the present invention is formulated with an organosilicon compound having a hydrolysable silyl group and a benzylideneamine structure in the molecule, which we find to enable high storage stability and high adhesion to be developed.

### FURTHER EXPLANATIONS; OPTIONS AND PREFERENCES

The present invention is now particularly described. It will be noted that the term "silane coupling agent" used herein is embraced within the category of "organosilicon compound".

The urethane prepolymer (A) used in the present invention and having an active isocyanate group is obtained by reacting a polyol having at least two hydroxyl groups (OH) with a polyisocyanate compound having at least two isocyanate groups (NCO) in such a way that the isocyanate group is in excess, i.e. the NCO/OH equivalent ratio is larger than 1. The reaction is carried out, for example, under such reaction conditions of an NCO/OH equivalent ratio of 2.0 to 15.0, more preferably 2.0 to 8.0. Reaction may be in a stream of nitrogen or dry air at 70 to 100°C for several hours. The resulting NCO-containing prepolymer should preferably have an NCO content within a range of 5 to 25 weight%. Commercial materials may be used.

The polyisocyanate compounds used for the preparation of the urethane prepolymer are not specifically limited so far as they have at least two isocyanate groups in the molecule. Examples of the polyisocyanate compound include: aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,2'-diphenylmethane diisocyanate (2,2'-MDI), 2,4'-diphenylmethane diisocyanate (2,4'-MDI), 1,4-phenylene diisocyanate, polymethylene polyphenylene polyisocyanate, tolidine diisocyanate (TODI), 1,5-naphthalene diisocyanate (NDI), xylylene diisocyanate (XDI), tetramethylxylylene diisocyanate (TMXDI) and triphenylmethane triisocyanate; aliphatic polyisocyanates such as hexamethylene diisocyanate (HDI), trimethylhexamethylene diisocyanate (TMHDI), lysine diisocyanate, and norbornane diisocyanate (NBDI); alicyclic polyisocyanates such as trans-cyclohexane-1,4-diisocyanate, isophorone diisocyanate (IPDI), bis(isocyanate methyl)cyclohexane (H₆XDI), and dicyclohexylmethane diisocyanate (H₁₂MDI); polyisocyanate compounds such as polymethylene polyphenylene polyisocyanate; carbodiimide-modified polyisocyanates of these isocyanate compounds; isocyanurate-modified polyisocyanates of the above isocyanate compounds; and urethane prepolymers obtained by reaction between the isocyanate compounds indicated above and polyol compounds indicated hereinafter. These polyisocyanate compounds may be used singly or in combination of at least two.

The polyol compounds used for the preparation of the urethane prepolymer are not specifically limited and include, for example, any of polyether polyols, polyester polyols, acrylic polyols, polycarbonate polyols and other types of polyols. These polyols may be used singly or in combination of at least two. Specific examples of the polyol compound include polypropylene ether diol, polyethylene ether diol, polypropylene ether triol, polytetramethylene glycol, polyethylene glycol (PEG), polypropylene glycol (PPG), polyoxyethylene glycol, polyoxypropylene glycol, polyoxypropylene triol, polyoxybutylene glycol, polytetramethylene ether glycol (PTMG), polymer polyol, poly(ethylene adipate), poly(diethylene adipate), poly(propylene adipate), poly(tetramethylene adipate), poly(hexamethylene adipate), poly(neopentylene adipate), and poly-ε-caprolactone, poly(hexamethylene carbonate). Besides, natural polyol compounds such as castor oil may also be used.

The polyol compound has a number average molecular weight of 1,000 to 20,000, preferably 2,000 to 10,000, calculated as polystyrene according to the gel-permeation chromatography (GPC).

The organosilicon compound of the component (B) (silane coupling agent) used in the present invention should have both of the following structures (i) and (ii):
(i) Hydrolysable silyl group
(ii) Benzylidene structure.

The organosilicon compound having both of (i) and (ii) above can be represented by the following formula (1): 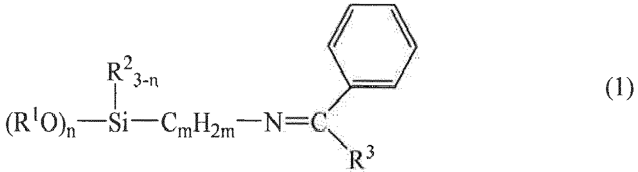 wherein R¹ represents an alkyl group having 1 to 10 carbon atoms or an aryl group having 6 to 10 carbon atoms, R² represents an alkyl group having 1 to 10 carbon atoms or an aryl group having 6 to 10 carbon atoms, R³ represents hydrogen, an aryl group having 6 to 10 carbon atoms or t-butyl, letter n is an integer of 1 to 3, and letter m is an integer of 1 to 12.

The organosilicon compound of the following formula (2) is preferred: 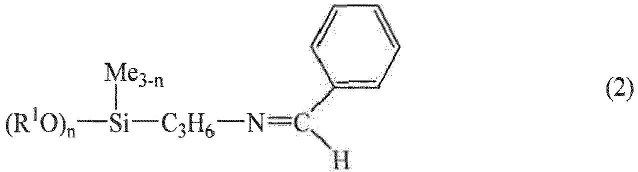 wherein R¹ and letter n have the same meanings as defined above, and Me is methyl.

In the formulae, examples of the alkyl or aryl group of R¹ include methyl, ethyl, propyl, butyl, or phenyl, among which methyl and ethyl are preferred.

Examples of the alkyl or aryl group of R² include methyl, ethyl, propyl, butyl, or phenyl, of which methyl is preferred.

Examples of R³ include hydrogen, aryl group having 6 to 10 carbon atoms, or t-butyl, and the aryl group includes phenyl or tolyl, of which hydrogen is preferred.

The content of the organosilicon compound is preferably at least 1 part by weight and up to 10 parts by weight, more preferably at least 1.5 parts by weight and up to 8 parts by weight, per 100 parts by weight of the urethane prepolymer serving as a main agent. If the content of the organosilicon compound is at least 1 part by weight, an effect of improving an adhesion performance can usually more reliably be obtained. In the case where the content of the organosilicon compound is up to 10 parts by weight, the composition of this embodiment is inhibited from curing and foaming, and a cost increase can be suppressed. Therefore, if the content of the organosilicon compound is within the ranged defined above, the composition of the embodiment may desirably stably ensure excellent adhesion to an adherend, even without use of a primer composition. The adherend herein may include a material such as glass, or an olefin resin including a polypropylene resin.

The use of the urethane prepolymer of the component (A) as main component in combination with the organosilicon compound (B) enables the composition of the embodiment to stably have excellent adhesion to an adherend without use of a primer composition. Especially, the composition of the embodiment exhibits excellent adhesion to an adherend including a material such as glass or an olefin resin including a polypropylene resin. More particularly, the hydrolysable silyl group (Si-OR group) of the organosilicon compound is hydrolysed with moisture in air into a silanol group (Si-OH group), which reacts with the OH group of glass to form an Si-O-Si bond thereby ensuring high adhesion. Moreover, the benzylideneamine structure is deprotected with moisture in air to form an amino group (-NH₂ group). The resulting amino group and the NCO group of the urethane prepolymer form a urea bond to ensure high adhesion.

Generally, a ketimine compound forms an imine structure in an equilibrium state due to the imine-enamine tautomerism. Accordingly, upon mixing with an isocyanate compound, the amine compound forming the imine structure and the isocyanate group react with each other, with some concern that storage stability may be worsened. The organosilicon compound (B) used in the present invention has such a structure that no imine-enamine tautomerism occurs. Thus, when an isocyanate compound is mixed, no reaction proceeds thus ensuring good storage stability.

Aside from the above components, the urethane adhesive composition of the present invention may be further formulated, if necessary, with various types of additives including any of a curing catalyst, an adhesiveness-imparting agent, a physical property modifier, a filler, a plasticizer, a thixotropic agent, a dehydrating agent (storage stability modifier), a tackifier, a sag inhibitor, an ultraviolet (UV) absorber, an antioxidant, a flame retardant, a colorant, and a radical polymerization initiator, and also with various types of solvents such as toluene and an alcohol.

The filler is not specifically limited and examples of the filler include, for example: an inorganic filler such as calcium carbonate, aluminum hydroxide, carbon black, white carbon, silica, glass, kaolin, talc (magnesium silicate), fumed silica, precipitated silica, anhydrous silicic acid, hydrous silicic acid, clay, sintered clay, bentonite, glass fibers, asbestos, glass filaments, crushed quartz, diatomaceous earth, aluminum silicate, zinc oxide, magnesium oxide, titanium oxide, or a surface-treated product thereof; an organic filler such as carbonate, organic bentonite, high styrene resin, coumarone-indene resin, phenolic resin, formaldehyde resin, modified melamine resin, cyclized resin, lignin, ebonite power, shellac, cork powder, bone powder, wood powder, cellulose powder, coconut husk powder, or wood pulp; an inorganic pigment such as lamp black, titanium white, red iron oxide, titanium yellow, zinc flower, red lead, cobalt blue, iron black, or aluminum powder, or an organic pigment such as Neozapon Black RE, Neoblack RE, Orazole Black CN or Orazole Black Ba (all, manufactured by Ciba-Geigy Ltd.), or Spilon Blue 2BH (manufactured by Hodogaya Chemical Co., Ltd.). Of these, carbon black or calcium carbonate is preferred so as to impart desired characteristic properties. These carbon black and calcium carbonate are not specifically limited, and commercially sold ones may be used therefor. For instance, examples of carbon black include N110, N220, N330, N550, and N770, which are standardized in American Society for Testing and Materials (ASTM), or a mixture thereof, and examples of calcium carbonate include ground calcium carbonate, or precipitated calcium carbonate. These fillers may be used singly or in combination of at least two. The amount ranges from 0 to 100 parts by weight, preferably from 0 to 70 parts by weight, per 100 parts by weight of the urethane prepolymer.

The catalyst is not specifically limited so far as it is capable of react with the main component. Examples of the catalyst include, for example: a metal catalyst such as stannous octoate, dibutyltin diacetate, dibutyltin dilaurate, dibutyltin oxide, dibutyltin dimethoxide, dibutyltin dimaleate, dibutyltin bisacetylacetonate, dibutyltin silylate, or bismuth octylate; a divalent organotin compound such as tin octanoate, tin octylate, tin butyrate, tin naphthenate, tin caprylate, tin oleate, or tin laurate; a tetravalent organotin compound such as dibutyltin dioctoate, dibutyltin dilaurate, dibutyltin diacetate, dibutyltin dimaleate, dibutyltin distearate, dibutyltin dioleate, dibutyltin benzoate, dioctyltin dilaurate, dioctyltin diversatate, diphenyltin diacetate, dibutyltin dimethoxide, dibutyltin oxide, dibutyltin bis(triethoxysilicate) or a reaction product of dibutyltin oxide and a phthalic ester; a tin chelate compound such as dibutyltin diacetylacetonate or dibutyltin bis(acetylacetonate); a primary amine such as butylamine, hexylamine, octylamine, dodecylamine, oleylamine, cyclohexylamine, or benzylamine; a secondary amine such as dibutylamine; a polyamine such as diethylenetriamine, triethylenetetramine, guanidine, diphenylguanidine, or xylylenediamine; a cyclic amine such as triethylenediamine or its derivative, 2-methyltriethylenediamine, morpholine, N-methylmorpholine, 2-ethyl-4-methylimidazole, or 1,8-diazabicyclo[5.4.0]-7-undecene; an aminoalcohol compound such as monoethanolamine, diethanolamine, or triethanolamine; an amine compound or its carboxylate such as an aminophenol compound including 2,4,6-tris(dimethylaminomethyl)phenol; a quaternary ammonium salt such as benzyltriethylammonium acetate; a low molecular weight amide resin obtained from an excess polyamine and a polybasic acid; and a reaction product of an excess polyamine and an epoxy compound. Of these, the tin-based and amine-based catalysts are preferred from the standpoint that great catalytic capability is ensured in small amounts. These catalysts may be used singly or in combination of at least two. The amount usually ranges from 0.01 to 5 parts by weight, preferably from 0.1 to 2 parts by weight, per 100 parts by weight of the urethane prepolymer.

The urethane adhesive composition of the embodiment has such characteristic features as set out above and can be used as an adhesive in the fields of automobiles or vehicles (trains e.g. bullet trains or electric trains), boats and ships, aircrafts, building and civil engineering, electronics, the space industry and other industrial products.

It will be noted that when the adhesive composition of the present invention is coated, its thickness can be appropriately chosen and is generally in the range of 0.1 to 100 mm, preferably 1 to 10 mm.

### EXAMPLES

The present invention is described in more detail by way of Examples and Comparative Examples. The present invention should not be construed as limited to these Examples. The dynamic viscosity (mm²/s) was measured according to the method of JIS Z 8803 wherein a sample was kept at 25°C for one hour and the Cannon-Fenske viscometer was used for the measurement. The viscosity (Pa·second) was measured according to the method of JIS Z 8803 wherein a sample was kept at 25°C for one hour and a rotary viscometer was used for the measurement.

### (A) Synthesis of urethane prepolymer

600 g of propylene ether triol having a number average molecular weight of 5,000 (G-5000 with the commercial name of "EXCENOL 5030," manufactured by Asahi Glass Co., Ltd.) and 300 g of polypropylene ether diol having a number average molecular weight of 2000 (D-2000 with the commercial name of "EXCENOL 2020," manufactured by Asahi Glass Co., Ltd.) were charged into a flask, heated to 100 to 130°C, and agitated with de-gassing so as to allow dehydration to such an extent that the moisture percentage arrived at not more than 0.01%. Thereafter, the contents were cooled down to 90°C, to which diphenylmethane diisocyanate (MDI with the commercial name of "Sumijule 44S," manufactured by Sumitomo Bayer Japan Co., Ltd.) was added in such a way that an equivalent ratio of NCO group/OH group (NCO mol/OH mol) was 1.70, followed by reaction for about 24 hours in an atmosphere of nitrogen to prepare a urethane prepolymer.

### (B) Synthesis of organosilicon compound (1) having a benzylideneamine structure

424 g (4 mols) of benzaldehyde and 300 g of toluene were placed in a one-liter separable flask equipped with an agitator, an ester adapter, a reflux cooler, a dropping funnel and a thermometer, in which 179 g (1 mol) of 3-aminopropyltrimethoxysilane was dropped at 125°C. During the dropping, the resulting water was distilled off by refluxing along with the toluene. After completion of the dropping, reduced-pressure concentration and filtration were performed to obtain a light yellow transparent liquid having a viscosity of 14 mm²/s. The silane coupling agent obtained in this manner was provided as organosilicon compound (1).

### (B) Synthesis of organosilicon compound (2) having a benzylideneamine structure

424 g (4 mols) of benzaldehyde and 300 g of toluene were placed in a one-liter separable flask equipped with an agitator, an ester adapter, a reflux cooler, a dropping funnel and a thermometer, into which 221 g (1 mol) of 3-aminopropyltriethoxysilane was dropped at 125°C. During the dropping, the resulting water was distilled off by refluxing along with the toluene. After completion of the dropping, reduced pressure concentration and filtration were performed to obtain a light yellow transparent liquid having a viscosity of 7 mm²/s. The silane coupling agent obtained in this manner was provided as organosilicon compound (2).

### (B) Synthesis of organosilicon compound (3) having a benzylideneamine structure

The above organosilicon compound (1) was purified by distillation under conditions of 0.6 kPa and 150°C to obtain a colorless transparent liquid having a viscosity of 4 mm²/s. The silane coupling agent obtained in this manner was provided as organosilicon compound (3).

### Examples 1 to 6 and Comparative Examples 1 and 2

The formulation components indicated in the following Table 1 were mixed in amounts (parts by weight) indicated in Table 1 to prepare compositions. The viscosity changes of the respective compositions after storage in a thermostatic chamber at 50°C are indicated in Table 1.

**Table 1**

| Component (parts by weight) | | Example | | | | | | Comparative Example | |
|---|---|---|---|---|---|---|---|---|---|
| | | 1 | 2 | 3 | 4 | 5 | 6 | 1 | 2 |
| Isocyanate compound A | | 95 | | 95 | | 95 | | 95 | |
| Isocyanate compound B | | | 95 | | 95 | | 95 | | 95 |
| Organosilicon compound (1) | | 5 | 5 | | | | | | |
| Organosilicon compound (2) | | | | 5 | 5 | | | | |
| Organosilicon compound (3) | | | | | | 5 | 5 | | |
| Organosilicon compound (4) | | | | | | | | 5 | 5 |
| Viscosity (Pa·second) | Initial stage | 200 | 400 | 185 | 385 | 190 | 390 | 202 | 400 |
| | After 1 day | 205 | 405 | 190 | 390 | 191 | 391 | 2,000 | 1,000 |
| | After 7 days | 210 | 408 | 196 | 396 | 191 | 392 | 6,000 | 5,000 |
| | After 14 days | 215 | 412 | 202 | 402 | 195 | 394 | gelled | gelled |

Isocyanate compound A:
urethane prepolymer having an active isocyanate group [Polymeric MDI (M-200, manufactured by Mitsui Chemicals, Inc.)]

Isocyanate compound B:
urethane prepolymer having an active isocyanate group [Aliphatic isocyanate (Duranate TLA-100, manufactured by Asahi Kasei Chemicals Corporation)]

Organic silicon compound (4):
3-triethoxysilyl-N-(1,3-dimethylbutylidene)-propylamine (KBE-9103, manufactured by Shin-Etsu Chemical Co., Ltd.)

The results of the examples and comparative examples give evidence that the urethane adhesive compositions embodying the present invention have high storage stability.

### Examples 7 to 13 and Comparative Examples 3 and 4

The formulation components indicated in the following Table 2 were mixed in amounts (parts by weight) indicated in the following Table 2 to prepare urethane adhesive compositions. Urethane prepolymer is as described above.

Next, the adhesive compositions prepared in this manner were each coated onto a float glass adherend (50 mm × 50 mm × 5 mm in thickness), followed by drying by heating under conditions of 120°C and ten minutes to provide a composite material wherein the adhesive layer was formed on the adherend.

Under the same conditions as indicated above, the respective adhesive compositions were coated onto an anodized aluminum sheet (50 mm × 50 mm × 3 mm in thickness), an acrylic resin sheet (50 mm × 50 mm × 3 mm in thickness), and a polyester sheet (50 mm × 50 mm × 3 mm in thickness) and dried to provide composite materials wherein the adhesive layer was formed on the adherend. It will be noted that the thickness of the adhesive layer was 3 mm.

The resulting composite materials were subjected to measurement of adhesion according to the following method. The results are shown in Table 2.

### Adhesion

The adhesion of the adhesive layer to the respective adherends was evaluated in the following way. Each composite material was aged by allowing it to stand for three days under conditions of 23°C and 55% RH. Thereafter, the adhesive layer was cut with a knife and the cut portion was subjected to a hand peel test of peeling the layer with fingers so as to visually observe the state of the interface between the adherend and the adhesive layer.

**Table 2**

| Component (parts by weight) | | Example | | | | | | | Comparative Example | |
|---|---|---|---|---|---|---|---|---|---|---|
| | | 7 | 8 | 9 | 10 | 11 | 12 | 13 | 3 | 4 |
| Urethane prepolymer | | 94 | 64 | 94 | 94 | 64 | 94 | 94 | 94 | 94 |
| Organosilicon compound (1) | | 5 | 5 | 5 | | | | | | |
| Organosilicon compound (2) | | | | | 5 | 5 | 5 | | | |
| Organosilicon compound (3) | | | | | | | | 5 | | |
| Organosilicon compound (4) | | | | | | | | | 5 | |
| Organosilicon compound (5) | | | | | | | | | | 5 |
| Calcium carbonate | | | 30 | | | 30 | | | | |
| Carbon black | | | | 20 | | | 20 | | | |
| Curing catalyst (A) | | 1 | 1 | 1 | 1 | 1 | 1 | 1 | 1 | 1 |
| Adhesion | Float glass | Cohesive failure | Cohesive failure | Cohesive failure | Cohesive failure | Cohesive failure | Cohesive failure | Cohesive failure | Cohesive failure | Interfacial failure |
| | Anodized aluminum | Cohesive failure | Cohesive failure | Cohesive failure | Cohesive failure | Cohesive failure | Cohesive failure | Cohesive failure | Cohesive failure | Interfacial failure |
| | Acrylic resin | Cohesive failure | Cohesive failure | Cohesive failure | Cohesive failure | Cohesive failure | Cohesive failure | Cohesive failure | Cohesive failure | Interfacial failure |
| | Polyester resin | Cohesive failure | Cohesive failure | Cohesive failure | Cohesive failure | Cohesive failure | Cohesive failure | Cohesive failure | Cohesive failure | Interfacial failure |

Organosilicon compound (5):
3-isocyanate propyltriethoxysilane (KBE-9007, manufactured by Shin-Etsu Chemical Co., Ltd.)
Curing catalyst (A): Dibutyltin laurate

The results of the above Examples and Comparative Examples give evidence that the urethane adhesive compositions embodying the present invention have good adhesion.

### Notes

As a precaution the entire disclosure of Japanese Patent Application No. 2015-196462, the priority of which is claimed, is incorporated herein by reference.

Although some preferred embodiments have been described, many modifications and variations may be made thereto in light of the above teachings. It is therefore to be understood that the invention may be practised otherwise than as specifically described without departing from the scope of the general teachings herein.

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the composition, method and use constitutes the proposal of general combinations of those general preferences and options for the different features, insofar as they are combinable and compatible and are put forward in the same context.

## Claims

1. A urethane adhesive composition comprising:
(A) urethane prepolymer having active isocyanate group; and
(B) organosilicon compound represented by the following formula (1), or a hydrolysed condensate of such compound: 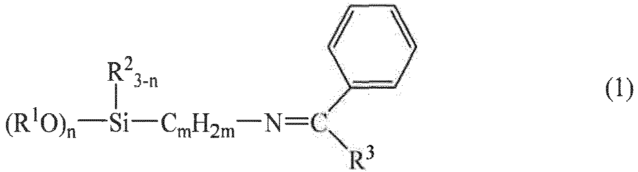 wherein R¹ represents alkyl group having 1 to 10 carbon atoms or aryl group having 6 to 10 carbon atoms, R² represents alkyl group having 1 to 10 carbon atoms or aryl group having 6 to 10 carbon atoms, R³ represents hydrogen, aryl group having 6 to 10 carbon atoms, or t-butyl group, n is an integer of 1 to 3, and m is an integer of 1 to 12.

2. Urethane adhesive composition of claim 1, wherein the organosilicon compound comprises an organosilicon compound represented by the following formula (2): 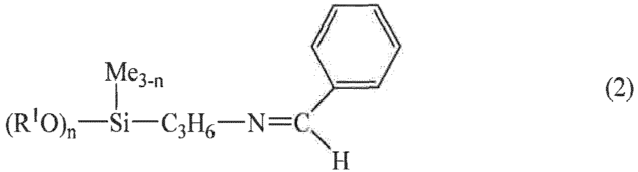 wherein R¹ and n have the same meanings as defined above, and Me is methyl.

3. Urethane adhesive composition of claim 1 or 2, wherein the content of the organosilicon compound is from 1 to 10 parts by weight per 100 parts by weight of the urethane prepolymer (A).

4. Urethane adhesive composition of any one of claims 1 to 3, wherein the composition is in the form of a one-component urethane adhesive composition.

5. Urethane adhesive composition of any one of claims 1 to 4 comprising any one or more of curing catalyst, adhesiveness-imparting agent, physical property modifier, filler, plasticizer, thixotropic agent, dehydrating agent (storage stability modifier), tackifier, sag inhibitor, ultraviolet (UV) absorber, antioxidant, flame retardant, colorant and radical polymerization initiator.

6. Method comprising the preparation of a urethane adhesive composition of any one of claims 1 to 5, comprising combining the specified components thereof.

7. Method of claim 6 comprising synthesizing the organosilicon compound of formula (1).

8. Use of a urethane adhesive composition of any one of claims 1 to 5 for adhesion to an adherend, such as an adherend of glass or resin.

9. Use according to claim 8 in which the composition is applied to the adherend without a primer.
